# EUROPÄISCHE PATENTSCHRIFT

(11) **EP 1 573 233 B1**
(45) Veröffentlichungstag und Bekanntmachung des Hinweises auf die Patenterteilung: **25.02.2009**
(21) Anmeldenummer: 03782146.9
(22) Anmeldetag: 08.12.2003
(51) Int. Cl.: F16H 49/00, F16H 55/08

(54) **GETRIEBE**
GEARING
TRANSMISSION

(30) Priorität: 12.12.2002 DE 10258188
(43) Veröffentlichungstag der Anmeldung: 14.09.2005
(73) Patentinhaber: Continental Automotive GmbH, 30165 Hannover (DE)
(72) Erfinder: WAHLER, Torsten, 78073 Bad Dürrheim (DE)
(86) Internationale Anmeldenummer: PCT/DE2003/004035
(87) Internationale Veröffentlichungsnummer: WO 2004/053360

(56) Entgegenhaltungen:
- CH-A- 467 954
- DE-A- 4 038 555
- DE-A- 10 125 322
- DE-A- 19 520 555

## Beschreibung

### Getriebe

Die Erfindung betrifft ein Getriebe mit einem feststehenden, innen gezahnten Hohlrad, einem ringförmigen, flexiblen Zahnband, das mit der Zahnung des Hohlrades in Eingriff steht, wobei das Zahnband weniger Zähne aufweist als das Hohlrad, und einem drehbaren Wellgenerator, der über ein Stößelrad eine Kraft auf das Zahnband überträgt, wobei aus einer Drehung des Wellgenerators eine Relativbewegung des Zahnbandes gegenüber dem Hohlrad resultiert.

Derartige Getriebe sind als "Harmonic-Drive" bekannt. Grundlage für die Realisierung des Funktionsprinzips ist ein verformbares Zahnband, der auch Flexring genannt wird, welcher durch den Wellgenerator angetrieben und dessen unrunde Form über das Stößelrad auf den Flexring übertragen wird. Der Querschnitt durch den Wellgenerator ist vorzugsweise ellipsenförmig. Treibt man den Wellgenerator an, wird eine Querwelle erzeugt, welche sich am Hohlrad abstützt. Die Drehzahlumwandlung wird durch die Zähnezahldifferenz zwischen dem Hohlrad und dem Flexring bestimmt. Da diese Differenz sehr klein ist, können sehr hohe Übersetzungen erreicht werden, insbesondere von 1:50 bis 1:5000.

Der Vorteil dieses Getriebeprinzips ist die sehr flache Bauweise bei niedriger Teilezahl.

Die DE 40 38 555 A1, die die Merkmale des Oberbegriffs des Anspruchs 1 enthält, offenbart ein Getriebe mit einem innenverzahnten Hohlrad und einem außenverzahnten Hülsenrad, wobei die Zähnezahl des Hülsenrades kleiner ist als die des Hohlrades. Die Verzahnung des Hülsenrades steht mit der Verzahnung des Hohlrades in Eingriff. Von einer Welle wird über eine Kupplungsscheibe eine Kraft auf das Hülsenrad übertragen, wobei aus einer Drehung der Welle eine Bewegung des Hülsenrads gegenüber dem Hohlrad resultiert.

Ein anderes Getriebe, das derartige Übersetzungen ermöglicht, ist ein mehrstufiges Planetengetriebe. Mehrstufige Planetengetriebe sind jedoch verhältnismäßig aufwendig und benötigen eine große Teilezahl, was zu erhöhten Herstellungskosten führt.

Daneben sind Schneckengetriebe bekannt, die zwar ebenfalls eine verhältnismäßig hohe Übersetzung ermöglichen, allerdings nur einen niedrigen Wirkungsgrad besitzen. In vielen Anwendungsfällen scheidet daher die Verwendung von Schneckengetrieben aus.

Bei den eingangs genannten "Harmonic-Drive"-Getrieben besteht das Problem, wie die Bewegung des Zahnbandes weitergeleitet wird. Dazu sind bisher zwei Ausführungen bekannt, die als Flextopf-Getriebe und als Flachgetriebe bezeichnet werden. Während der Abtrieb bei einem Flextopf-Getriebe direkt über den Flexring erfolgt, wird bei dem Flachgetriebe ein zweites Hohlrad benötigt, welches die selbe Zähnezahl besitzt wie der Flexring. Der Nachteil des Flextopf-Getriebes besteht in dem hohen benötigten Bauraum, während bei dem Flachgetriebe die Verzahnung speziell angepasst werden muss und darüber hinaus auch ein höherer Bauraum notwendig ist, um die Kupplungsstufe zu realisieren.

Aufgabe der Erfindung ist es, ein Getriebe anzugeben, das auch bei Einbeziehung der Kraftweiterleitung einen sehr niedrigen Bauraum benötigt und darüber hinaus einfach im Aufbau ist und wobei die Drehmomentübertragung optimiert ist.

Diese Aufgabe wird durch ein Getriebe der eingangs genannten Art gelöst, das durch die Merkmale des kennzeichnenden Teils des Anspruchs 1 gekennzeichnet ist.

Aufgrund der permanenten Verformung des Zahnbandes um die halbe Differenz des Wellgenerators ändert sich auch permanent der Winkel der einzelnen Zapfen zur Mittelachse und es stehen daher nicht alle Mitnahmeelemente zur Drehmomentübertragung zur Verfügung. Diese Schwachstelle wird durch die erfindungsgemäße Ausgestaltung der Nuten minimiert.

Der Vorteil der erfindungsgemäßen Ausgestaltung des Getriebes besteht in der sehr flachen Bauweise, ohne dass dafür viele Teile notwendig sind. Gegenüber dem oben genannten Flachgetriebe besteht der Vorteil, dass auf ein zweites Hohlrad als Kuppelelement verzichtet werden kann. Statt dessen wird ein einfach aufgebautes Gegenrad verwendet, das wesentlich billiger ist. Das Gegenrad kann in einer sehr einfachen Ausführung scheibenförmig sein mit radial angeordneten Nuten, in die die Mitnahmezapfen eingreifen. Da das Drehmoment immer über eine Mehrzahl von Zapfen übertragen wird, sind auch hohe Drehmomente übertragbar. An das Gegenrad können beliebige mechanische Elemente angeformt oder angebracht werden, um das Drehmoment weiterzuleiten, insbesondere kann das Gegenrad mit Zahnrädern, starren oder flexiblen Wellen, Kupplungen etc. verbunden werden.

Die Getriebeausführung ermöglicht es, für die gleiche Funktion weniger Teile einzusetzen. Im Falle eines Planetengetriebes, wie es häufig nach dem Stand der Technik eingesetzt wird, kommt ein Motorritzel, sechs Planetenräder, zwei Planetenträger sowie ein Hohlrad zum Einsatz. Ein Harmonic-Drive-Getriebe mit der erfindungsgemäßen Bewegungsübertragung benötigt nur noch fünf Teile, nämlich einen Wellgenerator, ein Stößelrad, einen Flexring, ein Hohlrad und ein Gegenrad.

Eine besonders vorteilhafte Verwendung des erfindungsgemäßen Getriebes erfolgt in einem digitalen Fahrtenschreiber zum Antrieb eines Chipkarten-Auswurfmechanismus.

Die Erfindung wird nachfolgend anhand eines Ausführungsbeispiels näher erläutert. Es zeigen:
- Figur 1: eine Draufsicht auf ein erfindungsgemäßes Getriebe,
- Figur 2: eine Schnittansicht durch das Getriebe von Figur 1,
- Figur 3: eine dreidimensionale Darstellung des flexiblen Zahnbandes,
- Figur 4: eine dreidimensionale Darstellung des Gegenrades,
- Figur 5: eine Darstellung zur Berechnung der Trapezform der Nuten,
- Figur 6: eine Schnittansicht durch das Gegenrad mit darin eingreifenden Mitnahmezapfen,
- Figur 7: eine detaillierte Darstellung der geometrischen Ausgestaltung der Mitnahmezapfen und
- Figur 8: eine Untenansicht des erfindungsgemäßen Getriebes der Figuren 1 und 2 mit dem Gegenrad und weiteren Abtriebselementen.

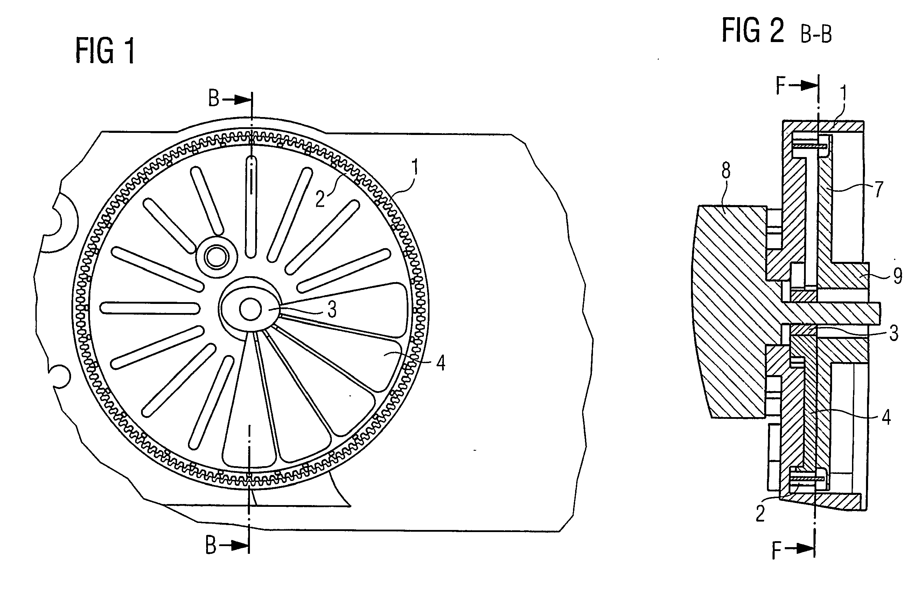

Die Figur 1 zeigt eine Draufsicht auf das erfindungsgemäße Getriebe. Außen befindet sich ein feststehendes Hohlrad 1, in dessen Zahnung auf der Innenseite ein flexibles Zahnband 2, der sogenannte Flexring, eingreift. Der Flexring 2 sitzt auf einem Stößelrad 4, wobei in der Figur 1 nicht alle Stößelelemente des Stößelrades 4 dargestellt sind. Die Stößelelemente des Stößelrades 4 lassen sich einstückig herstellen, so dass das Stößelrad 4 nur ein einziges Teil darstellt und somit einfach in der Handhabung ist. Gleichwohl müssen die Stößelelemente beweglich gegeneinander sein. Das Stößelrad 4 besitzt eine zentral Ausnehmung, in die ein Wellgenerator 3 hineinragt, der eine ellipsenförmige Kontur besitzt. Der Wellgenerator 3 ist drehbar gelagert und mit einem Antrieb verbunden, so dass bei einer Drehung des Wellgenerators 3 Querwellen entstehen, die auf die Stößelelemente des Stößelrades 4 übertragen werden. Die Querwellen stützen sich über den Flexring 2 an dem Hohlrad 1 ab. Der Flexring 2 und das Hohlrad 1 besitzen ineinander greifende Zähne, wobei der Flexring 2 weniger Zähne aufweist als das Hohlrad 1. Beim Durchlaufen der Querwellen kommt es daher zu einer Verschiebung des Flexringes 2 gegenüber dem Hohlrad 1. Damit eine Bewegung des Flexringes 2 gegenüber dem Hohlrad 1 möglich ist, müssen die Radien des Hohlrades 1 und des Flexringes 2 in geeigneter Weise aufeinander abgestimmt sein.

Die Figur 2 zeigt eine Schnittansicht durch das Getriebe von Figur 1. Hierbei ist zusätzlich ein Antrieb 8 zu erkennen, der über eine Welle den Wellgenerator 3 antreibt. Darüber hinaus ist in Figur 2 ein Gegenrad 7 zu erkennen, das in der nachfolgend beschriebenen Weise von dem Flexring 2 angetrieben wird. Zur Weiterleitung der Bewegung des Gegenrades 7 ist an dieses ein Zahnrad 9 angeformt, das wiederum mit einem anderen Zahnrad zusammenwirken kann. Ebenfalls in Figur 2 ist zu erkennen, dass der Flexring 2 so ausgebildet ist, dass er in das Gegenrad 7 eingreifen kann.

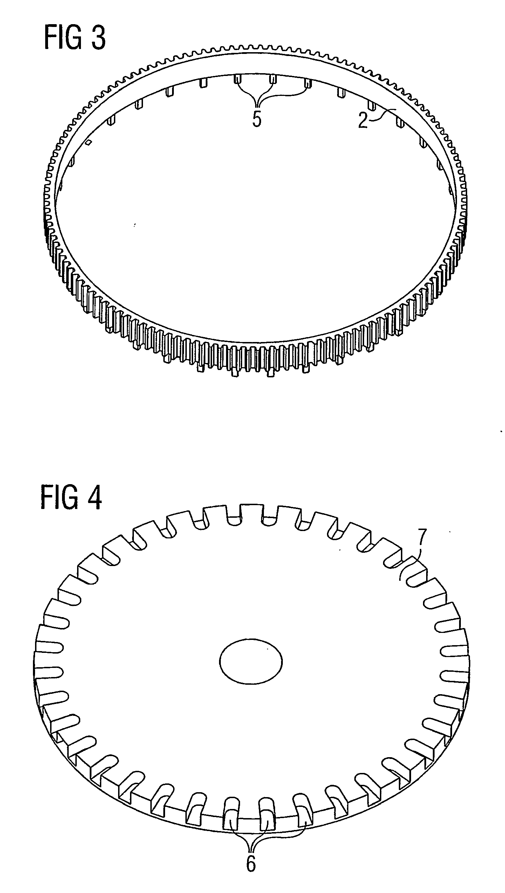

Der Flexring 2 des Getriebes von Figur 1 und Figur 2 ist in Figur 3 dargestellt. An einer Seitenfläche des Flexringes 2, in diesem Fall an der unteren Seite, sind Mitnahmezapfen 5 angeformt. Die Zapfen am Flexring 2 fallen aufgrund der geringen Dicke des flexiblen Bauteils sehr klein aus. Daher ist eine hohe Zahl an Zapfen 5 vorzusehen. Außerdem sollten so viele als möglich mit dem Gegenrad 7 in Eingriff stehen, um das Drehmoment sicher zu übertragen. Da der Flexring 2 eine Verformung um die Höhendifferenz des Wellgenerators 3 erfährt, müssen darüber hinaus die Mitnahmezapfen 5 um dieses Maß sich in dem Gegenrad 7 radial bewegen können.

Der Eingriff der Mitnahmezapfen 5 in das Gegenrad 7 erfolgt daher in der Weise, dass die Mitnahmezapfen 5 in radial verlaufende Nuten 6 des Zahnrades 7 eingreifen. Um die Drehmomentübertragung zwischen dem Flexring 2 und dem Gegenrad 7 zu optimieren, wobei dieses Problem durch die Verformung des Flexringes 2 entsteht, sind die Nuten 6 trapezförmig ausgebildet. Dies ist in der Ausführung von Figur 4 jedoch nicht dargestellt.

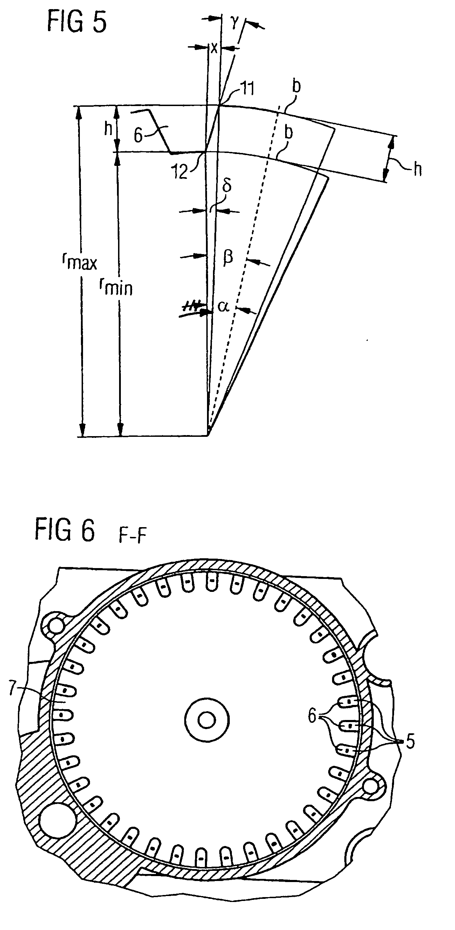

Die Berechnung trapezförmiger Nuten ist im folgenden anhand von Figur 5 dargestellt. Dabei wird der Bogen des Flexringes 2 in der Maximal- bzw. Minimal-Position als Kreis betrachtet.

In der Figur 5 ist "h" die Differenz des Wellgenerators 3, die von der zur Anwendung kommenden Ellipse des Wellgenerators abhängig ist. Die Differenz h ergibt sich dabei aus der halben Differenz des maximalen und des minimalen Radius. Diese Differenz wird auch als Hub bezeichnet. Der Radius rₘₐₓ ist der Radius des Hohlrades in den "Tälern" zwischen den Zähnen. Der Radius rₘᵢₙ ist der Radius des Hohlrades abzüglich des Hubs h. Der Winkel α berechnet sich zu α = 360°/Anzahl der Mitnahmezapfen 5. Das Bogenmaß b berechnet sich zu b = α*π*rₘₐₓ/180°. Das Bogenmaß ist bei beiden Betriebszuständen gleich, da sich der Abstand der Mitnahmezapfen 5 nicht ändert. Der Winkel β errechnet sich zu β = b*180°/(π * rₘᵢₙ). Daraus ergibt sich die Winkeldifferenz δ = β-α. Die Differenz x zwischen der äußeren Kante 11 der Nut 6 und der inneren Kante 12 der Nut 6 auf einem Kreisbogen berechnet sich zu x = tan δ* rₘᵢₙ. Daraus resultiert der Trapezwinkel γ mit Tangens γ = x/h. In der erfindungsgemäßen Ausgestaltung ist die Differenz (x) positiv (Figur 5).

In der Figur 6 ist ein Schnitt durch die Ebene F-F (vergleiche Figur 2) dargestellt. Dort ist zu erkennen, dass alle Mitnahmezapfen 5 in Nuten 6 des Gegenrades 7 eingreifen.

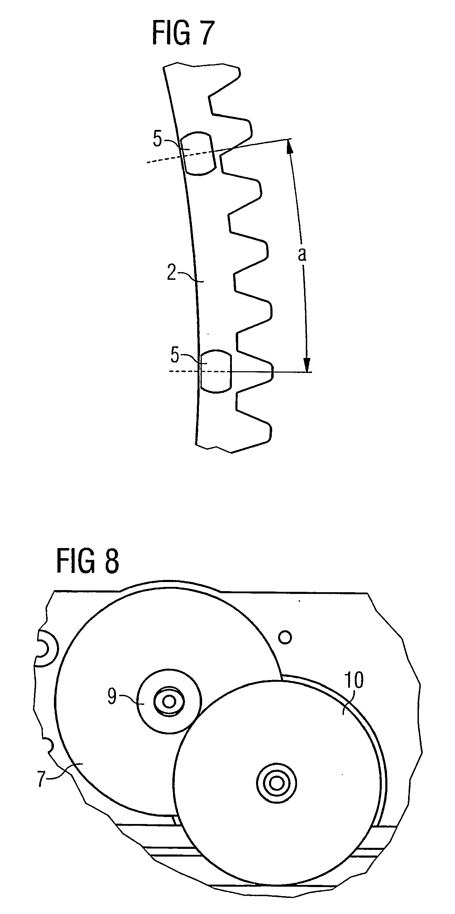

Die Figur 7 zeigt die Anordnung der Mitnahmezapfen 5 auf der Seitenfläche des Flexringes 2. "a" ist dabei der Abstand zwischen den Zapfen 5 und ergibt sich aus dem Umfang des Flexringes geteilt durch die Anzahl der Mitnahmezapfen 5.

Aus der Figur 8 ist ersichtlich, wie die Übertragung der Bewegung des Gegenrades 7 erfolgen kann. Dem gezeigten Ausführungsbeispiel ist an dem Gegenrad 7 ein Zahnrad 9 angeformt, welches in ein weiteres Zahnrad 10 eingreift. Dabei kann eine weitere Übersetzung erfolgen.

In dem gezeigten Ausführungsbeispiel liegen die Antriebswelle und die Abtriebswellen auf der gleichen Achse. Es kann aber auch ein Versatz der Antriebs- und Abtriebswelle ausgeglichen werden, beispielsweise zum Ausgleich von Toleranzen. Es ist sogar möglich, die Antriebs- und Abtriebswelle schon zwischen Flexring und Gegenrad zu versetzen. Dies funktioniert allerdings nur bei der Übertragung von niedrigen Drehmomenten, da hier nur noch wenige Mitnahmezapfen im Eingriff mit Nuten des Gegenrades stehen. In einer weitergehenden Ausführung ließe sich sogar eine Übersetzung einbauen nach dem Prinzip des Steggetriebes. Dabei müssten dann nicht einmal die Antriebs- und Abtriebswelle in einer Richtung, d. h. parallel stehen, sondern könnten beliebig winkelig zueinander angeordnet werden.

## Patentansprüche

1. Getriebe mit
- einem feststehenden, innen gezahnten Hohlrad (1),
- einem ringförmigen, flexiblen Zahnband (2), das mit der Zahnung des Hohlrades (1) in Eingriff steht, wobei das Zahnband (2) weniger Zähne aufweist als das Hohlrad (1), und
- einem drehbaren Wellgenerator (3), der eine Kraft auf das Zahnband (2) überträgt, wobei aus einer Drehung des Wellgenerators (3) eine Relativbewegung des Zahnbandes (2) gegenüber dem Hohlrad (1) resultiert,
- wobei ein Gegenrad (7) vorgesehen ist und an einer Seitenfläche des Zahnbandes (2) Mitnahmezapfen (5) angeformt sind, die in Ausnehmungen (6) des Gegenrads (7) eingreifen, und die Achsen des Wellgenerators (3) und des Gegenrades (7) parallel sind und die Ausnehmungen des Gegenrades (7) sich radial erstreckende Nuten (6) sind, und die Nuten (6) trapezförmig sind,
**dadurch gekennzeichnet, dass**
der drehbare Wellgenerator (3) die Kraft über ein Stößelrad (4) auf das Zahnband (2) überträgt,
wobei die Nuten (6) jeweils eine äußere Kante (11) und eine innere Kante (12) aufweisen, mit einer Differenz (x) zwischen der äußeren Kante (11) der Nut (6) und der inneren Kante (12) der Nut (6) auf einem Kreisbogen, wobei die Differenz (x) positiv ist.

2. Getriebe nach Anspruch 1,
**dadurch gekennzeichnet, dass**
die Getriebekomponenten Kunststoffspritzteile sind.

3. Verwendung des Getriebes nach einem der Ansprüche 1 bis 2 in einem digitalen Fahrtenschreiber zum Antrieb eines Chipkarten-Auswurfmechanismus.

## Claims

1. Gearing comprising
- a fixed, internally toothed internal gear (1),
- an annular, flexible toothed band (2), which is engaged with the toothing of the internal gear (1), the toothed band (2) having fewer teeth than the internal gear (1), and
- a rotatable wave generator (3), which transmits a force to the toothed band (2), a relative motion of the toothed band (2) with respect to the internal gear (1) resulting from a rotation of the wave generator (3),
- a mating gear (7) being provided and driving pins (5) being shaped on a lateral face of the toothed band (2), which engage in recesses (6) in the mating gear (7), and the axes of the wave generator (3) and of the mating gear (7) being parallel, and the recesses in the mating gear (7) being radially extending grooves (6), and the grooves (6) being trapezoidal,
**characterized in that**
the rotatable wave generator (3) transmits the force to the toothed band (2) via a tappet gear (4), the grooves (6) having in each case an outer edge (11) and an inner edge (12), with a difference (x) between the outer edge (11) of the groove (16) and the inner edge (12) of the groove (6) on a circular arc, the difference (x) being positive.

2. Gearing according to Claim 1, **characterized in that** the gearing components are plastic injection-molded parts.

3. Use of the gearing according to one of Claims 1 to 2 in a digital tachograph for driving a chip card eject mechanism.

## Revendications

1. Transmission comportant - une roue fixe (1) à denture intérieure,
- un ruban denté (2) circulaire et souple, qui est en prise avec la denture de la roue fixe (1), le ruban denté (2) ayant moins de dents que la roue fixe (1), et
- un réducteur harmonique rotatif (3), lequel transmet une force au ruban denté (2), un mouvement relatif du ruban denté (2) par rapport à la roue (1) à denture intérieure résultant d'une rotation du réducteur harmonique (3),
- où il est prévu une roue conjuguée (7) et où, sur une surface latérale du ruban denté (2), des pivots d'entrainement (5) sont ménagés et s'engrènent dans des évidements (6) de la roue conjuguée (7) et où les axes du réducteur harmonique (3) et de la roue conjuguée (7) sont parallèles et où les évidements de la roue conjuguée (7) sont des rainures (6) radiales et les rainures (6) ont une section trapézoïdale,
**caractérisée par le fait que** le réducteur harmonique rotatif (3) transmet, par l'intermédiaire d'une roue à poussoirs (4), une force au ruban denté (2), les rainures (6) ayant chacune une arête extérieure (11) et une arête intérieure (12), avec, sur un arc de cercle, une différence (x) entre l'arête extérieure (11) de la rainure (6) et l'arête intérieure (12) de la rainure (6), ladite différence (x) étant positive.

2. Transmission selon la revendication 1,
**caractérisée par le fait que**
les composantes de la transmission sont des pièces en matière plastique moulées par injection.

3. Transmission selon l'une des revendications 1 à 2, utilisée dans un tachygraphe numérique et destinée à commander un mécanisme de restitution de cartes à puces.
